Europäisches Patentamt

European Patent Office

Office européen des brevets

(19)

(11) **EP 0 961 805 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(21) Anmeldenummer: **98963360.7**

(22) Anmeldetag: **16.11.1998**

(51) Int Cl.[7]: **C08G 77/02**, C08L 3/02
// (C08L3/02, 31:04),
C08L83:02

(86) Internationale Anmeldenummer:
**PCT/DE1998/003385**

(87) Internationale Veröffentlichungsnummer:
**WO 1999/025756 (27.05.1999 Gazette 1999/21)**

(54) **KOMPONENTE ZUR HERSTELLUNG VON POLYMERMISCHUNGEN AUF DER BASIS VON STÄRKE UND VERFAHREN ZUR HERSTELLUNG DER KOMPONENTE**

COMPONENT FOR PRODUCING POLYMER MIXTURES ON THE BASIS OF STARCH AND A METHOD FOR PRODUCING THE SAME

COMPOSANT POUR LA PRODUCTION DE MELANGES POLYMERES A BASE D'AMIDON, ET PROCEDE DE PRODUCTION DE CE COMPOSANT

(84) Benannte Vertragsstaaten:
**AT BE CH DK FI FR GB GR IT LI LU NL SE**

(30) Priorität: **17.11.1997 DE 19750846**

(43) Veröffentlichungstag der Anmeldung:
**08.12.1999 Patentblatt 1999/49**

(73) Patentinhaber: **BIOP Biopolymer Technologies AG**
**01217 Dresden (DE)**

(72) Erfinder:
• **BERGER, Werner**
**D-01217 Dresden (DE)**

• **JEROMIN, Lutz**
**D-01445 Radebeul (DE)**
• **MIERAU, Uta**
**D-01309 Dresden (DE)**
• **OPITZ, Guntram**
**D-01279 Dresden (DE)**

(74) Vertreter: **Uhlemann, Henry, Dipl.-Chem. et al**
**Kailuweit & Uhlemann**
**Patentanwälte**
**Postfach 270 139**
**01171 Dresden (DE)**

(56) Entgegenhaltungen:
DE-A- 4 038 732          DE-A- 19 518 802
DE-A- 19 533 800          DE-A- 19 611 671

**Beschreibung**

Die Erfindung betrifft eine Komponente aus Polyvinylacetat und Alkali-Wasserglas zur Herstellung von thermoplastisch verformbaren, gut wasserformbeständigen, biologisch abbaubaren und hellen Polymermischungen auf der Basis von Stärke, die zur Herstellung von Folien, Halbzeugen oder Fertigprodukten, z.B. für Verpackungen, Behälter, Gärtnereibedarf, insbesondere Anzuchthilfen, und anderweitig eingesetzt werden kann und ein Verfahren zur Herstellung der Komponente.

In den letzten Jahren sind zahlreiche Verfahren zur Herstellung und Verformung von thermoplastischer Stärke (TPS) allein oder als Polymermischung bzw. Polymerschmelze oder Polymerblend (im folgenden Polymermischung) bekannt geworden. Diese Arbeiten wurden mit dem Ziel ausgeführt, neue bzw. erweiterte Einsatzfelder für nachwachsende Rohstoffe zu erschließen.

Grundlage aller bisher bekannten Erfindungen ist die Erkenntnis, daß die körnige Struktur nativer Stärke zuerst mit definierten Anteilen an Wasser oder/und niederen polyfunktionellen Alkoholen, wie Ethylenglykol, Propylenglykol, Glycerol, 1, 3-Butandiol, Di-glycerid, entsprechende Ether, aber auch Verbindungen wie Di-methylsulfoxid, Dimethylformamid, Dimethylharnstoff, Dimethylacetamid und/oder anderen Zusatzstoffen durch einen thermomechanischen Aufschluß zu thermoplastischen Material mit Hilfe von konventionellen Extrudern umgewandelt und dann verformt werden kann.

Der Gebrauchswert des Extrudats und der aus ihm hergestellten Produkte ist gering. Insbesondere ist das Material stark hydrophil.

Neuere Vorschläge befassen sich mit der Zumischung synthetisch gewonnener wasserfester Polymere, wie z. B. Polyethylen, Polypropylen, Polycaprolacton als Mischkomponente für Stärke. Dabei tritt aber das Problem auf, daß die Verträglichkeit zwischen den Polymerkomponenten ungenügend ist und die biologische Abbaubarkeit bzw. auch die Kostenstruktur ungünstig werden.

Der Stand der Technik ist umfassend im Schrifttum dokumentiert. Als Bezug sei auf die Publikation von R.F. T.Stepto et al. "Injection Moulding of Natural Hydrophilic Polymers in the Presence of Water" Chimia 41(1987) Nr.3, S. 76-81 und die dort zitierte Literatur sowie beispielhaft auf die Patente DE 4116404, EP 0327505, DE 4038732, US 5106890, DE 4117628, WO 94/04600, DE 4209095, DE 4122212, EP 0404723 oder EP 407350 hingewiesen.

In DE 40 38 732 wird im Extruder die mit Wasser und Glycerol plastifizierte Stärke mit vorwiegend Polyvinylacetat zu einer Polymermischung verarbeitet. Das Extrudat hat gegenüber TPS eine bessere Wasserresistenz. Bei höheren Stärkeanteilen färben sich das Extrudat bzw. aus ihm hergestellte Flaschen gelblich bis bräunlich. Der Stärkeeinsatz ist dadurch auf unter 50 % beschränkt.

Es wurde bereits eine leicht saure bis neutrale Komponente aus Polyvinylacetat und Wasserglas vorgeschlagen (DE 195 33 800), mit dem ein Polymergemisch aus Stärke und einem hydrophoben Polymer, z.B. Polyvinylacetat, extrudiert werden kann. Die Komponente wird aus Wasserglas und Polyvinylacetat sowie gegebenenfalls weiteren Säurekomponenten zur Einstellung des pH-Wertes im Extrusions-Prozeß bei intensiver Durchmischung hergestellt. Es wurde gefunden, daß bereits geringe Zusätze dieser Komponente eine erhebliche qualitative Verbesserung des Extrudats und der aus ihm hergestellten Erzeugnisse ergibt. Ohne oder nur mit geringer Verfärbung und bei Beibehaltung bzw. Verbesserung der Wasserformbeständigkeit kann gegenüber dem Stand der Technik erheblich mehr native Stärke eingesetzt werden. Offensichtlich trägt die Komponente dazu bei, daß die beiden an sich mischungsunverträglichen Phasen, die hydrophile thermoplastische Stärke und das hydrophobe Polymer bis zu einem gewissen Grad mischbar werden.

Weitere Versuche haben gezeigt, daß die Qualität der Endprodukte hinsichtlich der Wasserformbeständigkeit und Festigkeit noch weiter verbessert werden muß. Insbesondere war es auch nicht möglich, dünne Folien unter ca. 300 μm Dicke herzustellen.

Ausgehend von dem ökologischen Ziel, nachwachsende Rohstoffe zur wirtschaftlichen Herstellung umweltverträglicher Produkte noch stärker zu nutzen, bestand in der vorliegenden Erfindung die Aufgabe, eine Komponente anzugeben, mit der aus thermoplastischer Stärke und einem hydrophoben Polymer, zum Beispiel Polyvinylacetat, qualitativ hochwertigere thermoplastisch verformbare, biologisch abbaubare Polymergemische extrudiert werden können, sowie ein Verfahren zur Herstellung der Komponente aus Polyvinylacetat und Alkali-Wasserglas anzugeben.

Erfindungsgemäß wird die Komponente dadurch gewonnen, daß das Polyvinylacetat in Gegenwart katalytischer Zusätze von niedermolekularen, organischen Mono-, Di- und Trihydroxylverbindungen (z.B. Methanol, Ethanol, Ethylenglycol, Glycerol) unter kontinuierlicher Zugabe von basisch reagierenden Verbindungen und des Alkali-Silikats im Batch-Prozeß hydrolisiert und verseift wird.

Die Komponente enthält Organosilikate großer Homogenität und Feinheit aus teilverseiftem Polyvinylacetat und Alkalisilikatlösung, weitere in situ hergestellte Reaktionsprodukte und Reste des bei seiner Herstellung verwendeten Katalysators.

Charakteristisch für die Reaktionsführung ist, daß das Polyvinylacetat in ca. 50-%iger Suspension mit dem Katalysator vorgelegt und bei starker Durchmischung die basischen Verbindungen vor der Alkalisilikatlösung oder zusammen mit dieser zugegeben werden.

Weitere Einzelheiten der Erfindung sind den Patentansprüchen zu entnehmen.

Es hat sich gezeigt, daß mit dieser Komponente Polymergemische mit hohen Stärkeanteilen analog zu DE 195 33 800 extrudiert werden können. Die aus diesen Polymergemischen hergestellten Produkte haben, wie in den Ausführungsbeispielen näher gezeigt wird, in mehreren Parametern eine deutlich höhere Qualität. Insbesondere ist es bereits jetzt möglich Folien mit einer Stärke von unter 100 μm herzustellen.

Es wurden bereits verschiedene Modifikationen gefunden.

Insbesondere bei einer Vorverseifung des Polyvinylacetats mit Calciumhydroxid entsteht eine Komponente, mit der biologisch abbaubare Polymergemische hoher Festigkeit produziert werden können. Mit Calciumhydroxid und Natriumdisilikat (anstelle von Wasserglas) wurden die bisher besten Werte erzielt.

Auch geringe Zusätze von nativer Stärke und Vinylacetat oder von polyfunktionellem Silan (z.B. Dynasilan GLYMO der Fa. Hüls) bei der Herstellung der Komponente verbessern die Qualität der Endprodukte.

Die Komponente ist bei Raumtemperatur fest und oberhalb 40 °C eine strukturierte Flüssigkeit. Nach Entnahme aus dem Mischer kann überschüssiges Wasser durch Zentrifugieren entfernt werden. Üblicherweise verbleibt in dem Produkt eine Restfeuchte von 25% bis 30%. In ihr ist der verwendete Katalysator etwa proportional zu den eingesetzten Mengen Katalysator/Flüssigkeit enthalten.

Die Erfindung wird nachfolgend an mehreren Ausführungsbeispielen näher dargestellt.

Die Herstellung der verschiedenen Komponenten erfolgt in einem diskontinuierlich arbeitenden Fest-Flüssig-Mischer der Firma Gebrüder Lödige Maschinenbau GmbH. Der Mischer ist ausgerüstet mit einem über die Drehzahl regulierbaren Schleuderwerk (max. ca. 350 U/min) und einem Messerkopf, betreibbar bei konstanter Drehzahl. Das Aufheizen erfolgt durch den Doppelmantel des Mischers mittels drucküberlagertem Temperiersystem oder mit Direktdampf.

Nach Erreichen der Reaktionstemperatur von 120 bis 140 °C sind Reaktionszeiten von 1 bis 2 Stunden erforderlich.

Eingesetzt werden: Eine 55-%ige Polyvinylacetat-Suspension, 99,5%-iges Glycerol, 40%-iges Na-Wasserglas 37/40 sowie NaOH oder/und Ca(OH)$_2$.

Zur Ermittlung der Qualität wurden mit jeweils 10 % der entsprechenden Komponente Polymergemische auf der Basis von Polyvinylacetat und Stärke analog der DE 195 33 800 extrudiert und aus ihnen Probekörper und Flachfolien hergestellt. Das Masseverhältnis Stärke zu Polyvinylacetat betrug gleichbleibend in allen Versuchen 3:1.

Quellgrad (Q in %) und Löslichkeit (L in %) wurden an den Probekörpern ermittelt, die in Wasser bei Raumtemperatur über 24 Stunden gelagert wurden. Dabei entspricht der Quellgrad dem Quotienten aus der Massedifferenz vom ungetrockneten gequollenen Probekörper ($m_Q$) und dem gleichen, getrockneten Probekörper vor der Quellung ($m_A$) zur Ausgangsmasse des trockenen Probekörpers vor der Quellung ($m_A$):

$$Q = \frac{m_Q - m_A}{m_A} \text{ (in \%)}$$

Die Löslichkeit errechnet sich aus der Masse der getrockneten Ausgangsprobe ($m_A$), vermindert um die Masse der gewässerten, getrockneten Probe ($m_G$) und bezogen auf die Masse der getrockneten Ausgangsprobe:

$$L = \frac{m_A - m_G}{m_A} \text{ (in \%)}$$

Zugfestigkeit (σ in MPa), Dehnung (ε in %) und E-Modul (in MPa) wurden an Prüfkörpern in Form von Schulterstäben (L: 75 mm, $B_{schulter}$: 13 mm, $B_{steg}$: 4 mm) bestimmt. Diese wurden aus bei 130 °C extrudierten Flachfolien ausgestanzt und über 24 Stunden bei 50% relativer Luftfeuchte gelagert. Die Prüfgeschwindigkeit betrug 200 mm/min, die Messung wurden gemäß ISO 527 durchgeführt.

Die in der Tabelle (s. u.) angegebenen Zahlenwerte stellen Mittelwerte aus mehreren vergleichbaren Messungen dar.

Beispiel 1

In den unbeheizten Labormischer werden 1600 g Polyvinylacetat-Suspension und 120 g Glycerol eingewogen und unter Rühren mit Schleuderwerk (n 300 - 350 U/min) auf die Reaktionstemperatur von 140 °C aufgeheizt. 900 g der Natronwasserglaslösung, angereichert mit 171 g Natriumhydroxid, werden über eine Mikrodosierpumpe in das heiße Reaktionsmedium gegen den im Mischerinnenraum existierenden Druck, der der Temperatur und dem Wassergehalt entspricht, kontinuierlich dosiert. Die Dosiergeschwindigkeit wurde so gewählt, daß mit Abschluß der Dosierung die angestrebten Reaktionen im wesentlichen vollzogen waren. Im Beispiel betrug die Dosier- und Reaktionszeit 2h. Während der gesamten Dosierzeit ist neben dem Schleuderwerk auch der Messerkopf eingeschaltet. Nach der Dosierung der Natronglaswasserlösung wird mit 0,25 N Natronlauge gespült, um das restliche Wasserglas der Reaktionsmischung zuzuführen.

Die Eigenschaften der extrudierten Polymermischung enthält die nachfolgende Tabelle unter Beispiel 1.

Zum Vergleich wurde eine Komponente analog zu DE 195 33 800, aber ebenfalls im Batch-Prozeß (also unter besseren Bedingungen) hergestellt. Die Eigenschaften der extrudierten Polymermischung enthält die nachfolgende Tabelle unter Beispiel 0.

Es ist zu erkennen, daß die Werte des mit der erfindungsgemäß hergestellten Komponente extrudierten Polymergemischs verbessert sind. Vor allem aber konnten wesentlich dünnere Folien als bisher hergestellt werden.

Beispiel 2

Wie Beispiel 1, jedoch anstelle der dem Natronwasserglas zugesetzten Menge Natriumhydroxid wird eine äquimolare Menge Calciumhydroxid dem Reaktionsansatz zugesetzt. Nach dem Aufheizen wird das Wasserglas mit der Mikrodosierpumpe zudosiert und die Reaktion nach der unter Beispiel 1 beschriebenen Verfahrensweise beendet.

Beispiel 3

Das Calciumhydroxid wird in die Polyvinylacetat-/Glycerolrnischung eingewogen und innig homogenisiert. Anschließend wird der Ansatz auf Reaktionstemperatur gebracht und über 1 h belassen. Danach erfolgt die Dosierung des Natronwasserglases wie in den Beispielen 1 und 2.

Durch Variation der Reaktionszeit und -temperatur sowie der Konzentration der basischen Ausgangsstoffe kann der Grad der Vorverseifung variiert werden.

Durch den Einsatz von Calciumhydroxid und insbesondere durch die Variante der Vorverseifung wird die Wasserfestigkeit des Polymergemischs verbessert (s. Tabelle, Beispiele 2 und 3).

Beispiel 4

Dem Reaktionsansatz werden 5 % native Kartoffelstärke, bezogen auf die Einwaage der Polyvinylacetat-Suspension, vor der Verseifung zugegeben und auf die in Beispiel 1 beschriebene Weise umgesetzt. Gegenüber den Werten aus Beispiel 1 tritt eine gewisse Verschlechterung auf (Tabelle, Beispiel 4).

Beispiel 5:

Dem umgesetzten Reaktionsprodukt aus Polyvinylacetat, Natriumhydroxid und Natronwasserglas werden 5 % Kartoffelstärke und 0,5 % Vinylacetat, bezogen auf die Einwaage der Polyvinylacetat-Suspension zugesetzt und eine einstündige Umesterung bei 40 °C durchgeführt. Die Produkteigenschaften verbessern sich wesentlich. (Tabelle, Beispiel 5).

Beispiel 6:

Der Zusatz von 5 % eines polaren organofunktionellen Silans mit einer Glycidylgruppe und mit hydrolysierbaren Methoxysilan-Gruppen (Dynasilan GLYMO, Fa. Hüls), bezogen auf die Masse des durch das Natronwasserglas in die Komponente eingebrachten Silikates, wirkt ebenfalls positiv auf die Eigenschaften des extrudierten Compounds (Tabelle, Beispiel 6). Hierzu wird die eingewogene Menge des Silans der fertigen Komponente bei einer Temperatur unter 100 °C zugemischt. Die Masse wird auf 120 °C erhitzt und 20 min bei dieser Temperatur gerührt.

Beispiel 7:

Eine weitere Möglichkeit der Beeinflussung des Eigenschaftsbildes extrudierter Stärke/Polyvinylacetat-Mischungen eröffnet sich durch die Synthese einer Komponente, bestehend aus der Polyvinylacetat-Suspension zum Teil verseift mit Calciumhydroxid, und Natriumdisilikat. Die Zusammensetzung des Reaktionsansatzes wird dabei so gewählt, daß sie dem Verseifungsgrad und Silikatgehalt der Komponente gemäß Beispiel 1 entspricht. Die Polyvinylacetat-Suspension, Calciumhydroxid und Natriumdisilikat werden eingewogen, auf Reaktionstemperatur gebracht und eine der Wasserglasdosierung entsprechende Zeit (2 h) bei dieser Temperatur gehalten. (Tabelle, Beispiel 7)

Tabelle:

| Bsp. | Komponente | Q (%) | L (%) | σ (MPa) | ε (%) | E-Modul (MPa) |
|---|---|---|---|---|---|---|
| | Eigenschaftswerte der mit den verschiedenen erfindungsgemäßen Komponenten (Beispiele 1 bis 7) und der Vergleichskomponente (Beispiel 0) extrudierten Polymergemische | | | | | |
| 0 | Rezeptur gemäß DE 195 33 800 | 142 | 20 | 8 | 80 | 76 |
| 1 | NaOH in Natronwasserglas gelöst | 113 | 16 | 10,9 | 74 | 88 |
| 2 | $Ca(OH)_2$, ohne Vorverseifung | 95 | 17 | 9,8 | 91 | 126 |
| 3 | $Ca(OH)_2$, mit Vorverseifung | 90 | 16 | 10,5 | 77 | 155 |
| 4 | mit Kartoffelstärke | 129 | 21 | 6,7 | 118 | 23 |
| 5 | mit Kartoffelstärke und Vinylacetat | 105 | 14 | 12,6 | 62 | 293 |
| 6 | mit Dynasilan GLYMO | 106 | 15 | 13,4 | 75 | 216 |
| 7 | mit $Ca(OH)_2$ und Natriumdisilikat | 87 | 15 | 15,4 | 56 | 464 |

**Patentansprüche**

1. Komponente zur Herstellung von Polymergemischen aus thermoplastifizierter Stärke und einem hydrophoben Polymer, z. B. Polyvinylacetat,
**gekennzeichnet dadurch,**
**daß** die Komponente Organosilikate mit einer weitgehend homogenen Struktur aus teilverseiftem Polyvinylacetat und Alkalisilikatlösung, weitere in situ hergestellte Reaktionsprodukte und Reste des bei seiner Herstellung verwendeten Katalysators enthält und in basischer, wäßriger Dispersion unter Zusatz eines Katalysators von niedermolekularen organischen Mono-, Di- oder Trihydroxylverbindungen in einer Menge von 0,5 bis 20 % bezogen auf die Masse des Polyvinylaceates in einem Batch-Prozeß synthetisiert wird.

2. Verfahren zur Herstellung einer Komponente aus Polyvinylacetat und Alkalisilikat, wie insbesondere Alkali-Wasserglas, bei intensiver Durchmischung und Scherung, erhöhter Temperatur und erhöhtem Druck - für die Herstellung von Polymergemischen aus thermoplastifizierter Stärke und einem hydrophoben Polymer, wie insbesondere Polyvinylacetat, -
**gekennzeichnet dadurch,**
**daß** das Polyvinylacetat in Gegenwart katalytischer Zusätze in einer Menge von 0,5 bis 20 % bezogen auf die Masse des Polyvinylacetates von niedermolekularen, organischen Mono-, Di- oder Trihydroxylverbindungen unter kontinuierlicher Zugabe von basisch reagierenden Verbindungen und des Alkalisilikats im Batch-Prozeß hydrolisiert und verseift wird.

3. Verfahren nach Anspruch 2,
**gekennzeichnet dadurch,**
**daß** das Polyvinylacetat mit basisch reagierenden Verbindungen bis zu einem Hydrolysegrad von 10 % bis 30 % vorverseift und anschließend auf einen Hydrolysegrad zwischen 50 % und 80 % endverseift wird.

4. Verfahren nach Anspruch 2,
**gekennzeichnet dadurch,**
**daß** aus dem Polyvinylacetat und dem Wasserglas, beginnend bei einem pH-Wert 9-10, ein leicht alkalisches Organosilikat mit einem pH-Wert von 7 bis 8,5 aufgebaut wird.

5. Verfahren nach Anspruch 2,

**gekennzeichnet dadurch,**
**daß** zusammen mit dem alkalischen Wasserglas oder zuvor ein Hydroxid zugesetzt wird.

6. Verfahren nach Anspruch 2,
   **gekennzeichnet dadurch,**
   **daß** dem Polyvinylacetat Calciumhydroxid bis zum Erreichen eines Verseifungsgrades zwischen 10 % und 40 % zugesetzt wird.

7. Verfahren nach Anspruch 2,
   **gekennzeichnet dadurch,**
   **daß** als Katalysator Methanol und/oder Ethanol und/oder Ethylenglykol und/oder Diethylenglykol und/oder Triethylenglykol und/oder Glycerol zugesetzt werden.

8. Verfahren nach Anspruch 2,
   **gekennzeichnet dadurch,**
   **daß** die Gesamtheit der zugesetzten Katalysatorverbindungen eine Menge von 5 % bis 17 % bezogen auf die Masse des Polyvinylacetates, nicht überschreitet.

9. Verfahren nach Anspruch 8,
   **gekennzeichnet dadurch,**
   **daß** im Chargenprozeß Polyvinylacetat in Form einer wäßrigen Suspension vorgelegt, auf die Reaktionstemperatur von 100 °C bis 150 °C aufgeheizt, kontinuierlich die basisch reagierende Verbindung zur Vorverseifung zudosiert und nach Erreichen des gewünschten Verseifungsgrades auf Reaktionstemperatur die alkalische Wasserglaslösung zudosiert wird.

10. Verfahren nach Anspruch 2,
    **gekennzeichnet dadurch,**
    **daß** das Mischungsverhältnis Polyvinylacetat zum Alkalisilikat, ausgedrückt in Massenanteilen des Feststoffes, im Bereich 50 : 50 bis 80 : 20 liegt.

11. Verfahren nach Anspruch 2,
    **gekennzeichnet dadurch,**
    **daß** an Stelle der Alkali-Silikatlösung wenigstens teilweise Natriumdisilikat und ein Hydroxid eingesetzt wird.

12. Verfahren nach Anspruch 2,
    **gekennzeichnet dadurch,**
    **daß** dem Reaktionsansatz oder der Komponente (3-Glycidyloxypropyl)trimethoxysilan zugesetzt wird.

13. Verfahren nach Anspruch 12,
    **gekennzeichnet dadurch,**
    **daß** der Silan-Masseanteil 3 % bis 15 % der mit der Alkalisilikatlösung eingebrachten Silikatmenge beträgt.

14. Verfahren nach Anspruch 2,
    **gekennzeichnet dadurch,**
    **daß** dem Reaktionsansatz oder der Komponente native Stärke zugegeben wird.

15. Verfahren nach Anspruch 14,
    **gekennzeichnet dadurch,**
    **daß** 5 bis 15% native Stärke, bezogen auf die Masse des Polyvinylacetates zugegeben wird.

16. Verfahren nach Anspruch 14,
    **gekennzeichnet dadurch,**
    **daß** zusammen mit der Stärke Vinylacetat zugegeben wird.

17. Verfahren nach Anspruch 16,
    **gekennzeichnet dadurch,**
    **daß** 0,5 bis 1,5 % Vinylacetat, bezogen auf die Masse des Polyvinylacetates zugegeben wird.

**Claims**

1. Component for producing polymer mixtures from thermoplasticized starch and a hydrophobic polymer, e.g. polyvinylacetate, **characterized in that** the component contains organosilicates with a largely homogeneous structure of partly saponified polyvinylacetate and alkali silicate solution, other reaction products produced in situ and remainders of the catalysator used in its manufacture and is synthesized in basic, aqueous dispersion while adding a catalysator of low-molecular organic mono-, di- or trihydroxyl compounds (in a quantity of 0.5% to 20% in relation to the mass of the polyvinylacetate) in a batch process.

2. Process for producing a component from polyvinylacetate and alkali silicate such as particularly alkali water glass, with intensive thorough mixing and shear, at increased temperature and increased pressure - for the production of polymer mixtures from thermoplasticized starch and a hydrophobic polymer, such as particularly polyvinylacetate -, **characterized in that** the polyvinylacetate is hydrolyzed and saponified in the presence of catalytic additives in a quantity of 0.5% to 20% in relation to the mass of the polyvinylacetate of low-molecular organic mono-, di- or trihydroxyl compounds while continuously adding basic reacting compounds and the alkali silicate in a batch process.

3. Process of claim 2 **characterized in that** the polyvinylacetate is pre-saponified with basic reacting compounds up to a degree of hydrolysis of 10% to 30% and then is finally saponified to a degree of hydrolysis of between 50% to 80%.

4. Process of claim 2 **characterized in that** beginning from a pH-value of 9-10, a mildly alkaline organosilicate with a pH-value of 7 to 8.5 is built up.

5. Process of claim 2 **characterized in that** a hydroxide is added together with the water glass or previously.

6. Process of claim 2 **characterized in that** calcium hydroxide is added to the polyvinylacetate until having reached a degree of saponification of between 10% and 40%.

7. Process of claim 2 **characterized in that** as a catalysator methanol and/or ethanol and/or ethylene glycol and/or diethylene glycol and/or triethylene glycol and/or glycerol are added.

8. Process of claim 2 **characterized in that** the entire mass of the catalysator compounds does not exceed a quantity of 5% to 17% in relation to the mass of the polyvinylacetate.

9. Process of claim 10 **characterized in that** in the batch process polyvinylacetate is entered in aqueous suspension, heated to the reaction temperature of 100°C to 150°C, the basic reacting compound is continuously added for presaponification, and after having reached the desired degree of saponification the alkaline water glass solution is added at reaction temperature.

10. Process of claim 2 **characterized in that** the mixing ratio polyvinylacetate to alkali silicate, expressed in mass proportion of the solid matter, is in the range of 50:50 to 80:20.

11. Process of claim 2 **characterized in that,** instead of the alkali silicate solution, at least partly, natrium silicate and a hydroxide are added.

12. Process of claim 2 **characterized in that** (3-glycidyloxypropyl)trimethoxysilane is added to the reaction batch or the component.

13. Process of claim 12 **characterized in that** the mass proportion of the silane is 3% to 15% of the silicate quantity introduced with the alkali silicate solution.

14. Process of claim 2 **characterized in that** native starch is added to the reaction batch or the component.

15. Process of claim 14 **characterized in that** 5% to 15% native starch, in relation to the mass of the polyvinylacetate, is added.

16. Process of claim 14 **characterized in that** vinyl acetate is added together with the starch.

**17.** Process of claim 16 **characterized in that** 0.5% to 1.5% vinyl acetate, in relation to the mass of the polyvinylacetate, is added.

**Revendications**

**1.** Composant destiné à la préparation de mélanges polymères à partir d'amidon thermoplastifié et d'un polymère hydrophobe, par exemple de poly(acétate de vinyle), **caractérisé en ce que** le composant contient des organosilicates possédant une structure largement homogène de poly(acétate de vinyle) partiellement saponifié et d'une solution de silicate alcalin, d'autres produits de réaction fabriqués in situ et des restes du catalyseur utilisé pour la préparation, et est synthétisé dans une dispersion aqueuse basique en ajoutant un catalyseur de composés mono-, di- ou tri-hydroxyle organiques de faible masse moléculaire dans une quantité comprise entre 0,5 et 20 %, sur la base de la masse du poly(acétate de vinyle), lors d'un procédé discontinu.

**2.** Procédé de préparation, d'un composant à partir de poly(acétate de vinyle) et de silicate alcalin, comme en particulier de verre soluble alcalin, par mélange intensif et cisaillement, à une température élevée et une pression élevée - pour fabriquer des mélanges polymères composés d'un amidon thermoplastifié et d'un polymère hydrophobe, comme en particulier du poly(acétate de vinyle), **caractérisé en ce que** le poly(acétate de vinyle) est hydrolysé et saponifié lors d'un procédé discontinu, en présence d'ajouts catalytiques d'une quantité de 0,5 à 20 %, sur la base de la masse du poly(acétate de vinyle), de composés mono-, di- ou tri-hydroxyle organiques de faible masse moléculaire, en ajoutant en continu des composés réagissant de façon basique et du silicate alcalin.

**3.** Procédé selon la revendication 2, **caractérisé en ce que** le poly(acétate de vinyle) est pré-saponifié avec des composés réagissant de façon basique jusqu'à un degré d'hydrolyse compris entre 10 % et 30 %, puis saponifié de façon finale selon un degré d'hydrolyse compris entre 50 % et 80 %.

**4.** Procédé selon la revendication 2, **caractérisé en ce que**, à partir du poly(acétate de vinyle) et du verre soluble, en partant d'une valeur de pH comprise entre 9 et 10, on élabore un organosilicate légèrement alcalin présentant une valeur de pH comprise entre 7 et 8,5.

**5.** Procédé selon la revendication 2, **caractérisé en ce que** l'on ajoute un hydroxyde en même temps que le verre soluble alcalin ou avant.

**6.** Procédé selon la revendication 2, **caractérisé en ce que** l'on ajoute au poly(acétate de vinyle) de l'hydroxyde de calcium jusqu'à atteindre un degré de saponification compris entre 10 % et 40 %.

**7.** Procédé selon la revendication 2, **caractérisé en ce que** l'on ajoute en tant que catalyseur du méthanol et/ou de l'éthanol et/ou de l'éthylèneglycol et/ou du diéthylèneglycol et/ou du triéthylèneglycol et/ou du glycérol.

**8.** Procédé selon la revendication 2, **caractérisé en ce que** la totalité des composés de catalyseur ajoutés ne dépasse pas une quantité comprise entre 5 % et 17 %, sur la base de la masse du polyacétate de vinyle.

**9.** Procédé selon la revendication 8, **caractérisé en ce que**, dans le procédé de charge, le poly(acétate de vinyle) se présente sous la forme d'une suspension aqueuse, est chauffé à une température réactionnelle comprise entre 100 °C et 150 °C, le composé réagissant de façon basique est ajouté par dosage en continu pour la pré-saponification et, une fois atteint le degré de saponification souhaité, la solution de verre soluble alcalin est dosée à la température réactionnelle.

**10.** Procédé selon la revendication 2, **caractérisé en ce que** le rapport de mélange entre poly(acétate de vinyle) et silicate alcalin, exprimé en fractions en masse de la matière solide, est compris dans la gamme allant de 50:50 à 80:20.

**11.** Procédé selon la revendication 2, **caractérisé en ce que**, à la place de la solution de silicate alcalin, on utilise au moins en partie du disilicate de sodium et un hydroxyde.

**12.** Procédé selon la revendication 2, **caractérisé en ce que** l'on ajoute à la préparation réactionnelle ou au composant du (3-glycidyloxypropyl)triméthoxysilane.

**13.** Procédé selon la revendication 12, **caractérisé en ce que** la fraction en masse de silane est comprise entre 3 % et 15 % de la quantité de silicate incorporée avec la solution de silicate alcalin.

**14.** Procédé selon la revendication 2, **caractérisé en ce que** l'on ajoute à la préparation réactionnelle ou au composant de l'amidon natif.

**15.** Procédé selon la revendication 14, **caractérisé en ce que** l'on ajoute 5 % à 15 % d'amidon natif, sur la base de la masse du poly(acétate de vinyle).

**16.** Procédé selon la revendication 14, **caractérisé en ce que** l'on ajoute avec l'amidon, de l'acétate de vinyle.

**17.** Procédé selon la revendication 16, **caractérisé en ce que** l'on ajoute 0,5 à 1,5 % d'acétate de vinyle, sur la base de la masse du poly(acétate de vinyle).